# EUROPÄISCHE PATENTSCHRIFT

(11) **EP 3 734 064 B1**
(45) Veröffentlichungstag und Bekanntmachung des Hinweises auf die Patenterteilung: **29.09.2021**
(21) Anmeldenummer: 19171621.6
(22) Anmeldetag: 29.04.2019
(51) Int. Cl.: F03D 17/00, F03D 80/00, G01B 7/16, G01L 1/22

(54) **SENSORBOLZEN**
INSTRUMENTED BOLT
BOULON INSTRUMENTÉ

(43) Veröffentlichungstag der Anmeldung: 04.11.2020
(73) Patentinhaber: Wölfel Engineering GmbH & Co. KG., 97204 Höchberg (DE)
(72) Erfinder: Ebert, Carsten, 97204 Höchberg (DE); Katz, Sebastian, 97204 Höchberg (DE)
(74) Vertreter: Keil & Schaafhausen Patentanwälte PartGmbB

(56) Entgegenhaltungen:
- US-A- 3 411 361
- US-A- 5 783 751
- US-A1- 2003 000 314
- US-A1- 2015 063 941
- LIU FENGRUI ET AL: "An interpretation of the load distributions in highly torqued single-lap composite bolted joints with bolt-hole clearances", COMPOSITES:PART B, ELSEVIER, AMSTERDAM, NL, Bd. 138, 21. November 2017 (2017-11-21), Seiten 194-205, XP085358969, ISSN: 1359-8368, DOI: 10.1016/J.COMPOSITESB.2017.11.027

## Beschreibung

Die Erfindung betrifft einen Sensorbolzen, insbesondere zur Verbindung eines Rotorblatts einer Windenergieanlage mit einem Träger, mit einem Schaft, an dem eine Sensoranordnung befestigt ist, und einem Axialkanal im Schaft.

Ein derartiger Sensorbolzen ist beispielsweise aus US 7 293 466 B2 bekannt.

Ein derartiger Sensorbolzen dient dazu, ein Rotorblatt mit dem Nabenflansch bzw. dem Pitch-Lager einer Windenergieanlage zu verbinden. Die Sensoranordnung kann verwendet werden, um bestimmte physikalische Gegebenheiten zu ermitteln, beispielsweise die auf das Rotorblatt wirkende Windlast. Damit kann man beispielsweise Informationen gewinnen, die man für eine Pitch-Regelung der Rotorblätter oder eine Rotorblatt individuelle Pitch-Regelung verwenden kann.

Eine weit verbreitete Möglichkeit, um die gewünschten Parameter zu gewinnen, besteht darin, Sensoren direkt am Rotorblatt zu befestigen, beispielsweise durch Kleben. Da Windenergieanlagen aber vielfach in einer relativ rauen Umgebung aufgestellt sind, ist sowohl die Montage als auch die Reparatur oder der Austausch derartiger Sensoren schwierig.

Wenn man die Sensoranordnung in einem Axialkanal im Schaft des Sensorbolzens vorsieht, dann ist die Sensoranordnung zwar geschützt und lässt sich durch Austausch des Sensorbolzens leicht austauschen. Allerdings steht hier nur ein begrenzter Bauraum zur Verfügung, der darüber hinaus nur schwer zugänglich ist.

US 5 783 751 A zeigt einen Schnittkraftsensor in der Form eines Schraubbolzens mit einem Kopf, einem Gewindeabschnitt und einem Messabschnitt auf der vom Kopf abgewandten Seite des Gewindeabschnitts. Der Messabschnitt ist mit vier flachen Seiten ausgebildet und weist ein Langloch auf, das zwei gegenüberliegende Seiten verbindet. Sensoren sind an den beiden anderen flachen Seiten des Messabschnitts angeordnet. Die Sensoren sind über Kabel mit einer Leitung verbunden, wobei die Kabel durch eine T-förmige Bohrung, die in eine Axialbohrung des Bolzens übergeht, geführt sind.

US 3 411 361 A zeigt einen gekapselten Stabsensor mit einem Vierkantstab, der ein Langloch aufweist, in dem Sensoren angeordnet sind. Die Sensoren sind mit Leitungen verbunden, die durch einen Axialkanal, der in das Langloch mündet, nach außen geführt sind. Das Langloch weist zwei Enden auf, die sich im Querschnitt entlang einer Kreislinie erstrecken.

US 2003/000314 A1 zeigt ein System und ein Verfahren zum Messen der Biegemomente in einem Stiftelement. Das Stiftelement weist einen Kopf, einen Gewindeabschnitt und dazwischen einen Biegebereich auf, in dem eine umlaufende Nut ausgebildet ist. In der Nut sind Sensoren angeordnet. Leitungen von den Sensoren verlaufen durch eine axiale Nut und durch eine Nut im Kopf nach außen.

US 2015/0063941 A1 zeigt eine elektronische Schraube mit einem Körper und einem Momentensensorelement. Der Körper weist einen Kopf und einen Schaft auf, der teilweise mit einem Gewindeabschnitt versehen ist. Der Rest des Schafts ist als Halsabschnitt ausgebildet. Eine Ausnehmung überlappt den Gewindeabschnitt und den Halsabschnitt. Das Sensorelement ist in der Ausnehmung angeordnet. In der Ausnehmung befindet sich eine Radialbohrung, die mit einer Axialbohrung in Verbindung steht.

Liu Fengrui et al.: "An interpretation of the load distributions in highly torqued single-lap composite bolted joints with bolt-hole clearances" zeigt einen Bolzen, der in einem Bereich zwischen einem Kopf und einem Gewindeabschnitt vier Ausnehmungen an seiner Oberfläche aufweist, die im Prinzip vier Seiten eines Vierecks bilden. In jeder dieser Ausnehmungen sind zwei Sensoren angeordnet, die beispielsweise als Dehnungs- oder Spannungssensoren ausgebildet sein können. Die Ausnehmungen sind in Form einer länglichen Nut ausgebildet, deren Enden eine Krümmung aufweisen, die offensichtlich über die gesamte Länge konstant sein soll.

Der Erfindung liegt die Aufgabe zugrunde, einen Sensorbolzen bereitzustellen, bei dem die Sensoranordnung gut zugänglich ist.

Diese Aufgabe wird bei einem Sensorbolzen der eingangs genannten Art dadurch gelöst, dass der Axialkanal in ein Langloch mündet, das sich quer zum Axialkanal erstreckt, wobei das Langloch in Axialrichtung zwei Enden aufweist, von denen mindestens eines bogenförmig mit einer sich ändernden Krümmung ausgebildet ist.

Das Langloch durchsetzt den Sensorbolzen und hat eine Erstreckung in eine Richtung parallel zum Axialkanal, die größer ist als eine Dicke des Langlochs, also seine Erstreckung senkrecht zur Axialrichtung. Damit werden weitere Zugangsmöglichkeiten zum Inneren des Sensorbolzens, insbesondere zum Axialkanal geschaffen. Allerdings wird durch die Verwendung eines Langlochs der Sensorbolzen nicht übermäßig geschwächt. Insbesondere wird die Querschnittsfläche des Sensorbolzens zwar vermindert, weil man hier den Querschnitt des Langlochs abziehen muss. Diese Verminderung ist jedoch hinnehmbar und deutlich kleiner als bei einer Zylinderbohrung mit gleicher Querschnittsfläche wie das Langloch. Die Krümmung an dem Ende des Langlochs ist also nicht kreislinienförmig ausgebildet, sondern weicht von einer Kreislinie ab. Damit ist es möglich, die Geometrie des Endes des Langlochs im Hinblick auf eine günstige Spannungsverteilung hin zu optimieren.

Vorzugsweise ist die Sensoranordnung über eine durch das Langloch und den Axialkanal geführte Kabelanordnung mit einem Verbinder verbunden, der an einem Sensorbolzenkopf angeordnet ist. Man nutzt den Axialkanal also primär oder ausschließlich, um die Kabelanordnung von der Sensoranordnung zu dem Verbinder zu führen. Man kann den Verbinder, der beispielsweise als Stecker oder Steckverbinder ausgebildet sein kann, in den Sensorbolzenkopf integrieren oder ihn auf andere Weise mit dem Sensorbolzenkopf verbinden. Am Verbinder kann eine Elektronik-Einheit angeordnet oder darin integriert sein, die Signale von der Sensoranordnung auswertet oder umwandelt.

Vorzugsweise endet der Axialkanal im Langloch. Damit beschränkt sich die Schwächung des Sensorbolzens durch den Axialkanal auf eine Strecke zwischen dem Langloch und dem Ende des Sensorbolzens, zu dem die Kabelanordnung hingeführt ist.

Hierbei ist bevorzugt, dass das Ende einen Scheitelbereich aufweist und die Krümmung zum Scheitelbereich hin zunimmt. Eine Zunahme der Krümmung bedeutet, dass ein lokaler Krümmungsradius kleiner wird. Die Zunahme der Krümmung muss allerdings nicht kontinuierlich erfolgen. Die Wand des Langlochs kann auch gerade Abschnitte aufweisen, die durch Verrundungen miteinander verbunden sind, was aus fertigungstechnischen Gründen vorteilhaft sein kann. Die geraden Abschnitte bilden dann aber nicht eine Folge von Tangenten an eine Kreislinie, sondern beispielsweise eine Folge von Tangenten an eine Linie mit zunehmender Krümmung. Die Länge der geraden Abschnitte ist klein. Sie beträgt weniger als 8% des größten Abstandes zwischen den längeren Seiten des Langlochs. Damit lässt sich ein Kerbform-optimiertes Langloch erreichen. Der Scheitelbereich ist der Bereich des Endes, an dem das Langloch seine größte Erstreckung in Axialrichtung aufweist.

Vorzugsweise sind beide Enden entgegengesetzt gleich ausgebildet. Die Optimierung im Hinblick auf die Spannungsverteilung lässt sich dann an beiden Enden des Langlochs durchführen.

Vorzugsweise weist das Langloch zwischen den beiden Enden einen ebenen Abschnitt auf. Dies erleichtert die Herstellung.

Vorzugsweise ist die Sensoranordnung im Langloch angeordnet. Bei dieser Ausgestaltung ist die Sensoranordnung im Langloch geschützt, insbesondere vor mechanischer Einwirkung von außen.

Hierbei ist bevorzugt, dass die Sensoranordnung zwei Sensoren aufweist, die gegenüberliegend an der Wand des Langlochs angeordnet sind. Das Langloch ist symmetrisch zur Längsachse des Sensorbolzens angeordnet. Wenn die beiden Sensoren an gegenüberliegenden Wänden des Langlochs angeordnet sind, können sie Belastungen sozusagen auch symmetrisch erfassen, um Biegeeinflüsse kompensieren oder diese bei entsprechender Verschaltung bestimmen zu können. Die Kabelanordnung kann dann aus dem Inneren des Langlochs durch den Axialkanal geführt werden.

Alternativ oder zusätzlich kann vorgesehen sein, dass der Schaft im Bereich des Langlochs abgeflachte Bereiche aufweist und Sensoren an den abgeflachten Bereichen angeordnet sind. In diesem Fall wird das Kabel von den Sensoren durch das Langloch in den Axialkanal geführt.

Vorzugsweise sind zwei abgeflachte Bereiche parallel zueinander angeordnet. Wenn man an diesen beiden abgeflachten Bereichen wiederum Sensoren anordnet, liegen diese sich jeweils gegenüber, um Biegeeinflüsse kompensieren zu können.

Hierbei ist bevorzugt, dass die abgeflachten Bereiche senkrecht zu der Wand des Langlochs ausgerichtet sind. Die abgeflachten Bereiche können zu einer geringfügigen Schwächung des Sensorbolzens führen.

Vorzugsweise weisen die abgeflachten Bereiche einen Abstand zu einer gedachten Mittenebene zwischen den abgeflachten Bereichen auf, der kleiner ist als ein Abstand der Ränder des Langlochs zu der Mittenebene. Damit hat das Langloch in eine Richtung senkrecht zur Mittenebene eine größere Erstreckung als ein Abstand zwischen den abgeflachten Bereichen.

Hierbei ist bevorzugt, dass die Ränder des Langlochs an einem Übergang zu den abgeflachten Bereichen jeweils eine Absenkung aufweisen. Damit wird gewährleistet, dass die Kabelanordnung, wenn sie von den abgeflachten Bereichen in den Axialkanal geführt wird und hierzu in das Langloch eintreten muss, nicht über den Außenumfang des Sensorbolzens vorsteht.

Vorzugsweise weist die Sensoranordnung Sensoren in Form von Dehnungssensoren, beispielsweise Dehnungsmessstreifen auf. Mit Dehnungssensoren lassen sich beispielsweise die auf den Sensorbolzen wirkenden Axialkräfte ermitteln. Bei der Verwendung von drei oder mehr derartiger Sensorbolzen zur Anbindung des Rotorblatts an den Nabenflansch bzw. das Pitch-Lager einer Windenergieanlage lässt sich damit die Bestimmung des Blattwurzelbiegemoments in Echtzeit durchführen, z.B. zur Verwendung in der Pitch-Regelung der Rotorblätter, der Rotorblatt individuellen Pitch-Regelung oder zur Blattlastenüberwachung.

Vorzugsweise weist die Sensoranordnung mindestens einen Temperatursensor auf. Der Sensorbolzen verbindet in der Regel Bauelemente aus unterschiedlichen Materialien, nämlich ein Rotorblatt aus einem faserverstärkten Kunststoff und einen Träger aus einem Metall. Beide Materialien haben unterschiedliche Wärmeausdehnungskoeffizienten, was zu Sensorsignalen führen kann, die temperaturabhängig sind. Mit Hilfe des Temperatursensors lässt sich nun zumindest in gewissen Grenzen eine Temperaturkompensation erreichen. Hierzu kann man beispielsweise so vorgehen, dass man die Sensorsignale in einer bestimmten Belastungssituation des Rotorblatts bei zwei verschiedenen Temperaturen ermittelt und aus einem Zusammenhang zwischen den Signalen oder einer daraus abgeleiteten Größe und den dazugehörigen Temperaturen im einfachsten Fall eine Gerade oder eine andere Funktion ermittelt, mit deren Hilfe man eine Korrekturgröße für die Sensorsignale herleiten kann.

Auch ist bevorzugt, wenn eine Elektronik im Schaft oder einem im oder am Schaft angeordneten Verbinder integriert ist. Die Elektronik kann damit bolzennah, also auch außerhalb des Sensorbolzens, aber nah am Verbinder, angeordnet sein. Die Aufbereitung oder sogar Auswertung der Sensorsignale kann dann unmittelbar vor Ort erfolgen, so dass das Risiko von Störungen, die auf einem Übertragungsweg eingetragen werden können, klein gehalten werden kann.

Die Erfindung betrifft insbesondere einen Sensorbolzen in einer Windenergieanlage, der ein Rotorblatt mit seinem Träger verbindet.

Die Erfindung wird im Folgenden anhand von bevorzugten Ausführungsbeispielen in Verbindung mit der Zeichnung beschrieben. Hierin zeigen:
- Fig. 1: eine perspektivische Teilansicht eines Sensorbolzens,
- Fig. 2: einen 1/4-Schnitt durch den Sensorbolzen nach Fig. 1,
- Fig. 3: eine schematische Darstellung eines Sensorbolzens einer zweiten Ausführungsform mit Dehnungssensoren in Form von Dehnungsmessstreifen,
- Fig. 4: eine stirnseitige Ansicht des Sensorbolzens nach Fig. 3 mit Steckverbinder,
- Fig. 5: eine schematische Darstellung eines Ausschnitts eines Endes des Sensorbolzens im Schnitt und
- Fig. 6: eine Draufsicht auf das Ende nach Fig. 5.

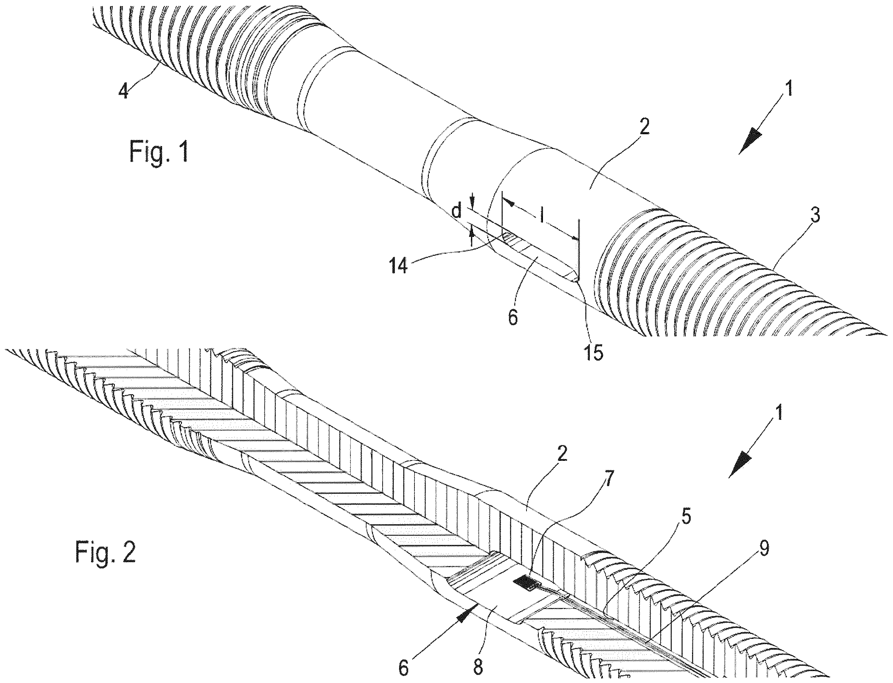

Fig. 1 zeigt schematisch einen Sensorbolzen 1, den man zur Verbindung eines Rotorblatts einer Windenergieanlage mit einem Träger, z.B. mit dem Nabenflansch bzw. dem Pitch-Lager der Windenergieanlage verwenden kann. In diesem Fall handelt es sich um einen Sensorbolzen einer Verbindung eines Rotorblatts einer Windenergieanlage mit einem Träger. Üblicherweise ist das Rotorblatt über eine Vielzahl von Bolzen mit dem Träger verbunden, von denen mehrere als Sensorbolzen ausgebildet sind.

Der Sensorbolzen 1 weist einen Schaft 2 auf, der zwei Gewindeabschnitte 3, 4 aufweist. Die Gewindeabschnitte 3, 4 sind Beispiele für Befestigungs- oder Montageabschnitte. Die Befestigungs- oder Montageabschnitte können auch auf andere Weise realisiert werden.

Der Sensorbolzen 1 weist einen Axialkanal 5 auf, der in ein Langloch 6 mündet, das den Sensorbolzen 1 durchsetzt. Bei der Ausgestaltung nach Fig. 1 und 2 sind zwei Sensoren 7 (nur einer ist in Fig. 2 sichtbar) im Langloch 6 angeordnet, genauer gesagt an einer Wand 8 des Langlochs 6 befestigt. Das Langloch 6 ist symmetrisch zu einer Längsachse des Sensorbolzens 1 und damit symmetrisch zu einer Längsachse des Schafts 2 angeordnet. Die beiden Sensoren 7 bilden zusammen eine Sensoranordnung und sind in der Lage, die Axialkraft im Sensorbolzen zu ermitteln, wobei sie Biegeeinflüsse kompensieren können. Es ist auch möglich, das Langloch 6 asymmetrisch zur Längsachse des Schafts 2 anzuordnen. In diesem Fall kann man beispielsweise einen Dehnungssensor in der neutralen Phase applizieren.

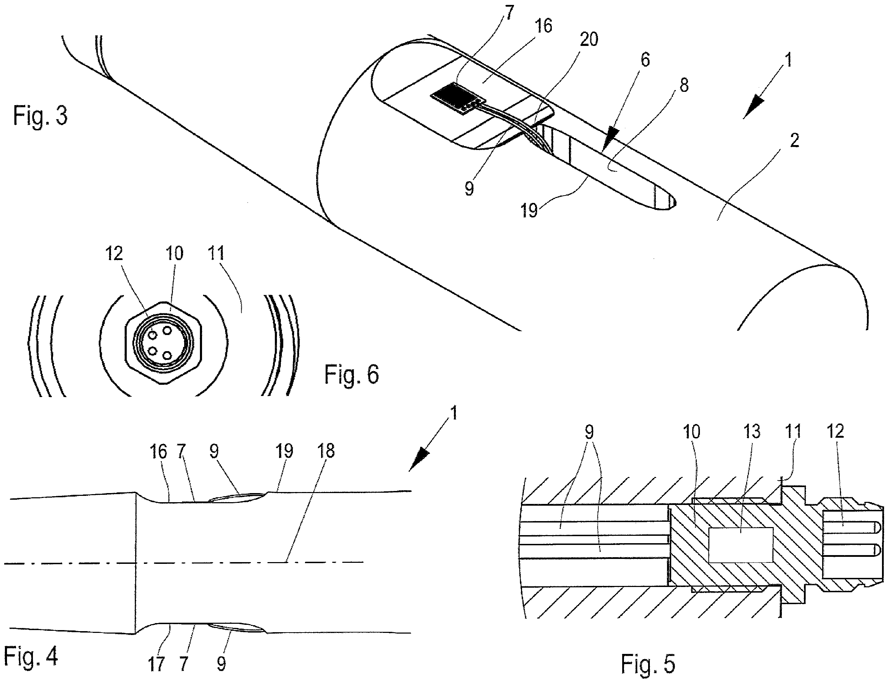

Von den Sensoren 7 der Sensoranordnung erstreckt sich eine Kabelanordnung 9 zu einem Verbinder 10 (Fig. 5), der an einem Kopf 11 des Sensorbolzens 1 (in Fig. 1 bis 4 nicht dargestellt) angeordnet ist. Der Verbinder 10 kann beispielsweise als Stecker oder Steckverbinder ausgebildet sein, zu dem die Signale der Sensoren 7 der Sensoranordnung geleitet werden. Die Sensoren 7 können beispielsweise als Dehnungsmessstreifen ausgebildet sein. Die Sensoranordnung kann auch zusätzlich noch einen Temperatursensor 21 (nur in Fig. 3 dargestellt) aufweisen.

Bei den Signalen kann es sich um eine Analog-Analog-Signalübertragung handeln, z.B. ein Stromsignal von 4.... 20 mA, wodurch sich eine relativ robuste Signalübertragung ergibt. Alternativ dazu kann es sich auch um eine analogdigitale Umwandlung handeln. Der Verbinder 10 weist beispielsweise eine Steckeranordnung 12 auf, mit der die entsprechenden Signale an eine weiterführende Leitung übertragen werden. Zudem kann eine Protokollwandlung, beispielsweise auf einen Feldbus oder ProfiNet, vorgenommen werden.

Die so gewandelten Sensorsignale können in Echtzeit der Steuerung der Windenergieanlage für die Verwendung in der Pitch-Regelung der Rotorblätter oder der Rotorblatt individuellen Pitch-Regelung (IPC, Individual Pitch Control) zugeführt werden.

Es ist auch möglich, einen Überspannungsschutz in den Verbinder 10 zu integrieren, um die Robustizität bei Blitzeinschlag in das Rotorblatt oder anderweitige Überspannungen zu erhöhen.

Weiterhin kann auch noch eine Elektronik 13 in den Verbinder 10 integriert sein, um die von den Sensoren 7 stammenden Signale bereits im Verbinder 10 zu verarbeiten. Die Elektronik kann auch an einer anderen Position im Sensorbolzen 1 angeordnet sein.

Der Axialkanal 5 endet im Langloch 6, d.h. lediglich vom Sensorbolzenkopf 11 bis zum Langloch 6 muss zur Ausbildung des Axialkanals 5 etwas Material aus dem Schaft des Sensorbolzens 1 entfernt werden.

Das Langloch 6 hat eine Geometrie, die im Hinblick auf die Spannungsverteilung in seiner Umgebung hin optimiert ist. Vereinfacht ausgedrückt handelt es sich um ein Kerbform-optimiertes Profil. Hierzu weist das Langloch 6 in Axialrichtung des Sensorbolzens 1 zwei Enden 14, 15 auf, von denen mindestens eines, vorzugsweise aber beide, bogenförmig mit einer sich ändernden Krümmung ausgebildet ist. Die Krümmung an den Enden 14, 15 des Langlochs 6 folgt also nicht einer Kreislinie. Vielmehr nimmt die Krümmung der Enden zu ihrem Scheitel hinzu. Der Scheitel befindet sich jeweils an der Position, an der das Langloch 6 seine größte Erstreckung in Axialrichtung hat.

Das Langloch 6 weist eine Länge I auf, die größer ist als eine Dicke d. Die Dicke d muss im Grunde nur so groß sein, dass man die Sensoren 7 im Langloch unterbringen und an der Wand 8 befestigen kann.

Das Langloch 6 weist im Bereich der Wand 8 einen ebenen Abschnitt auf. Dies erleichtert die Anbringung der Sensoren 7. Der Querschnitt des Sensorbolzens 1 wird durch das Langloch 6 nur in einem sehr geringen Umfang beeinträchtigt. Da die Dicke d wesentlich kleiner ist als die Länge I bleibt der Querschnitt des Spannbolzens 1 im Wesentlichen erhalten, auch wenn das Langloch 6 eine Wand mit einer relativ großen Fläche aufweisen kann.

Die Krümmung muss nicht unbedingt kontinuierlich oder stetig zunehmen. Es kann aus fertigungstechnischen Gründen von Vorteil sein, wenn man die Enden 14, 15 des Langlochs durch eine Abfolge von ebenen oder geraden Abschnitte bildet, die durch Verrundungen miteinander verbunden sind. Die Abschnitte sind allerdings relativ kurz und haben eine Länge von maximal 8% der Dicke d.

Bei der Ausgestaltung nach den Fig. 1 und 2 ist die Sensoranordnung mit den beiden Sensoren 7 (es können auch noch mehr oder weniger Sensoren vorgesehen sein) im Inneren des Sensorbolzens 1 aufgenommen und damit vor mechanischer Einwirkung geschützt.

Eine etwas einfachere Montagemöglichkeit ergibt sich bei einer Ausgestaltung des Sensorbolzens 1, die in den Fig. 3 und 4 dargestellt ist. Gleiche Elemente sind mit den gleichen Bezugszeichen versehen.

In diesem Fall weist der Schaft 2 im Bereich des Langlochs 6 abgeflachte Bereiche 16, 17 auf, an denen die Sensoren 7 angeordnet sind. Die beiden abgeflachten Bereiche 16, 17 sind parallel zueinander angeordnet. Wie man insbesondere in Fig. 3 erkennen kann, sind die abgeflachten Bereiche 16, 17 senkrecht zu der Wand 8 des Langlochs 6 ausgerichtet.

In Fig. 4 ist schematisch eine gedachte Mittenebene 18 eingezeichnet. Ein Abstand a zwischen den abgeflachten Bereichen 16, 17 und der gedachten Mittenebene 18 ist kleiner als ein Abstand der Ränder 19 des Langlochs 6 zu der Mittenebene 18.

Wie man in Fig. 3 erkennen kann, weist der Rand 19 des Langlochs 6 im Bereich der abgeflachten Bereiche 16 jeweils eine Absenkung 20 auf. Auf diese Weise ist es möglich, die Kabelanordnung 9 von abgeflachten Bereichen 16, 17 in das Langloch 6 zu führen, ohne dass man die Kabelanordnung 9 über den Außenumfang des Sensorbolzens 1 hinausführen müsste.

Der oben erwähnte Temperatursensor 21 kann im gleichen Bereich wie die Sensoren 7 angeordnet sein. Es ist auch möglich, die Sensoren 7 und den Temperatursensor 21 in unterschiedlichen Bereichen anzuordnen. Beispielsweise kann man die Sensoren 7 an den abgeflachten Bereichen und den Temperatursensor 21 im Langloch 6 anordnet oder die Sensoren im Langloch 6 und den Temperatursensor 21 an den abgeflachten Bereichen.

Der Temperatursensor 21 ist insbesondere von Vorteil, wenn der Sensorbolzen zur Verbindung von Bauelementen aus unterschiedlichen Materialien verwendet wird, wie dies beispielsweise in einer Windenergieanlage vielfach der Fall ist. Ein Rotorblatt aus einem faserverstärkten Kunststoff hat eine andere Wärmedehnung als eine Nabe oder ein anderer Rotorblattträger aus Metall. Damit besteht das Risiko, das der Sensorbolzen für die gleiche Belastungssituation des Rotorblatts bei unterschiedlichen Temperaturen unterschiedliche Signale erzeugt. Dies kann man mit Hilfe des Temperatursensors 21 kompensieren. Eine einfache Möglichkeit besteht darin, in einem Kalibrierungsschritt die Ausgangssignale des Sensorbolzens in der gleichen Belastungssituation des Rotorblatts bei zwei oder mehr verschiedenen Temperaturen zu ermitteln. Damit ergeben sich zwei oder mehr Datenpaare, von denen jedes eine Temperatur und ein Sensorsignal oder eine daraus abgeleitete Größe enthält. Aus den Datenpaaren lässt sich dann eine Funktion ermitteln (bei zwei Datenpaaren durch eine Gerade darstellbar), aus der man eine Korrekturgröße herleiten kann, mit der Temperatureinflüsse kompensiert werden können.

## Patentansprüche

1. Sensorbolzen (1) mit einem Schaft (2), an dem eine Sensoranordnung (7) befestigt ist, und einem Axialkanal (5) im Schaft (2), **dadurch gekennzeichnet, dass** der Axialkanal (5) in ein Langloch (6) mündet, das sich quer zum Axialkanal (5) erstreckt, wobei das Langloch (6) in Axialrichtung zwei Enden (14, 15) aufweist, von denen mindestens eines bogenförmig mit einer sich ändernden Krümmung ausgebildet ist.

2. Sensorbolzen nach Anspruch 1, **dadurch gekennzeichnet, dass** die Sensoranordnung (7) über eine durch das Langloch (6) und den Axialkanal (5) geführte Kabelanordnung (9) mit einem Verbinder (10) verbunden ist, der an einem Bolzenkopf (11) angeordnet ist.

3. Sensorbolzen nach Anspruch 1 oder 2, **dadurch gekennzeichnet, dass** der Axialkanal (5) im Langloch (6) endet.

4. Sensorbolzen nach einem der Ansprüche 1 bis 3, **dadurch gekennzeichnet, dass** das Ende (14, 15) einen Scheitelbereich aufweist und die Krümmung zum Scheitelbereich hin zu nimmt.

5. Sensorbolzen nach einem der Ansprüche 1 bis 4, **dadurch gekennzeichnet, dass** das Langloch (6) zwischen den beiden Enden (14, 15) einen ebenen Abschnitt (8) aufweist.

6. Sensorbolzen nach Anspruch 5, **dadurch gekennzeichnet, dass** die Sensoranordnung (7) im Langloch (6) angeordnet ist.

7. Sensorbolzen nach Anspruch 6, **dadurch gekennzeichnet, dass** die Sensoranordnung zwei Sensoren (7) aufweist, die gegenüberliegend an der Wand des Langlochs (6) angeordnet sind.

8. Sensorbolzen nach einem der Ansprüche 1 bis 7, **dadurch gekennzeichnet, dass** der Schaft (2) im Bereich des Langlochs (6) abgeflachte Bereiche (16, 17) aufweist und Sensoren (7) an den abgeflachten Bereichen (16, 17) angeordnet sind, von denen insbesondere, die vorzugsweise senkrecht zu der Wand des Langlochs (6) ausgerichtet sind.

9. Sensorbolzen nach Anspruch 8, **dadurch gekennzeichnet, dass** zwei abgeflachte Bereiche (16, 17) parallel zueinander angeordnet sind.

10. Sensorbolzen nach Anspruch 9, **dadurch gekennzeichnet, dass** die abgeflachten Bereiche senkrecht zu der Wand des Langlochs (6) ausgerichtet sind.

11. Sensorbolzen nach einem der Ansprüche 8 bis 10, **dadurch gekennzeichnet, dass** die abgeflachten Bereiche (16, 17) einen Abstand zu einer gedachten Mittenebene (18) zwischen den abgeflachten Bereichen (16, 17) aufweisen, der kleiner ist, als ein Abstand der Ränder (19) des Langlochs (6) zu der Mittenebene (18).

12. Sensorbolzen nach Anspruch 11, **dadurch gekennzeichnet, dass** der Rand (19) des Langloch (6) an einem Übergang zu den abgeflachten Bereichen (16, 17) jeweils eine Absenkung (20) aufweist.

13. Sensorbolzen nach einem der Ansprüche 1 bis 12, **dadurch gekennzeichnet, dass** die Sensoranordnung Sensoren (7) in Form von Dehnungssensoren aufweist.

14. Sensorbolzen nach Anspruch 13, **dadurch gekennzeichnet, dass** die Sensoranordnung mindestens einen Temperatursensor aufweist.

15. Sensorbolzen nach einem der Ansprüche 1 bis 14, **dadurch gekennzeichnet, dass** eine Elektronik im Schaft (2) oder einem im oder am Schaft (2) angeordneten Verbinder (10) integriert ist.

## Claims

1. An instrumented bolt (1) with a shank (2) to which a sensor arrangement (7) is attached, and with an axial channel (5) in the shank (2), **characterized in that** the axial channel (5) opens into an oblong hole (6) which extends transversely to the axial channel (5), the oblong hole (6) having two ends (14, 15) in the axial direction, at least one of which is formed to be arched with a changing curvature.

2. The instrumented bolt according to claim 1, **characterized in that** the sensor arrangement (7) is connected to a connector (10) arranged on a bolt head (11) via a cable arrangement (9) fed through the oblong hole (6) and the axial channel (5).

3. The instrumented bolt according to claim 1 or 2, **characterized in that** the axial channel (5) ends in the oblong hole (6).

4. The instrumented bolt according to any one of claims 1 to 3, **characterized in that** the end (14, 15) has an apex region and the curvature increases towards the apex region.

5. The instrumented bolt according to any one of claims 1 to 4, **characterized in that** the oblong hole (6) has a flat portion (8) between the two ends (14, 15).

6. The instrumented bolt according to claim 5, **characterized in that** the sensor arrangement (7) is arranged in the oblong hole (6).

7. The instrumented bolt according to claim 6, **characterized in that** the sensor arrangement has two sensors (7) arranged opposite each other on the wall of the oblong hole (6).

8. The instrumented bolt according to any one of claims 1 to 7, **characterized in that** the shank (2) has flattened regions (16, 17) in the region of the oblong hole (6) and sensors (7) are arranged on the flattened areas (16, 17) which, in particular, are preferably aligned perpendicular to the wall of the oblong hole (6).

9. The instrumented bolt according to claim 8, **characterized in that** two flattened regions (16, 17) are arranged parallel to each other.

10. The instrumented bolt according to claim 9, **characterized in that** the flattened regions are aligned perpendicular to the wall of the oblong hole (6).

11. The instrumented bolt according to any one of claims 8 to 10, **characterized in that** the flattened regions (16, 17) are at a distance from an imaginary center plane (18) between the flattened regions (16, 17), which distance is smaller than a distance of the edges (19) of the oblong hole (6) from the center plane (18).

12. The instrumented bolt according to claim 11, **characterized in that** the edge (19) of the oblong hole (6) at a transition to the flattened regions (16, 17) has a drop (20) in each case.

13. The instrumented bolt according to any one of claims 1 to 12, **characterized in that** the sensor arrangement has sensors (7) in the form of strain sensors.

14. The instrumented bolt according to claim 13, **characterized in that** the sensor arrangement has at least one temperature sensor.

15. The instrumented bolt according to any one of claims 1 to 14, **characterized in that** electronics are integrated in the shank (2) or in a connector (10) arranged in or on the shank (2).

## Revendications

1. Boulon instrumenté (1) avec une tige (2) sur lequel est fixé un système de détection (7) et un conduit axial (5) dans la tige (2), **caractérisé en ce que** le conduit axial (5) débouche dans un trou oblong (6), qui s'étend transversalement au conduit axial (5), sachant que le trou oblong (6) comporte dans la direction axiale deux extrémités (14, 15) dont au moins une est constituée en forme d'arc avec une courbure variant.

2. Boulon instrumenté selon la revendication 1, **caractérisé en ce que** le système de détection (7) est relié par le biais d'un système de câble (9) passé par le trou oblong (6) et le conduit axial (5) à un raccord (10), qui est disposé sur une tête de boulon (11).

3. Boulon instrumenté selon la revendication 1 ou 2, **caractérisé en ce que** le conduit axial (5) se termine dans le trou oblong (6).

4. Boulon instrumenté selon l'une quelconque des revendications 1 à 3, **caractérisé en ce que** l'extrémité (14, 15) comporte une zone de sommet et la courbure augmente vers la zone de sommet.

5. Boulon instrumenté selon l'une quelconque des revendications 1 à 4, **caractérisé en ce que** le trou oblong (6) comporte une section plane (8) entre les deux extrémités (14, 15).

6. Boulon instrumenté selon la revendication 5, **caractérisé en ce que** le système de détection (7) est disposé dans le trou oblong (6).

7. Boulon instrumenté selon la revendication 6, **caractérisé en ce que** le système de détection comporte deux capteurs (7), qui sont disposés opposés sur la paroi du trou oblong (6).

8. Boulon instrumenté selon l'une quelconque des revendications 1 à 7, **caractérisé en ce que** la tige (2) comporte des zones aplaties (16, 17) dans la zone du trou oblong (6) et des capteurs (7) sont disposés sur les zones aplaties (16, 17) dont certains en particulier, qui sont orientés de préférence perpendiculairement à la paroi du trou oblong (6).

9. Boulon instrumenté selon la revendication 8, **caractérisé en ce que** deux zones aplaties (16, 17) sont disposées parallèlement l'une à l'autre.

10. Boulon instrumenté selon la revendication 9, **caractérisé en ce que** les zones aplaties sont orientées perpendiculairement à la paroi du trou oblong (6).

11. Boulon instrumenté selon l'une quelconque des revendications 8 à 10, **caractérisé en ce que** les zones aplaties (16, 17) comportent une distance par rapport à un plan médian (18) imaginé entre les zones aplaties (16, 17), qui est plus petite qu'une distance des bords (19) du trou oblong (6) par rapport au plan médian (18) .

12. Boulon instrumenté selon la revendication 11, **caractérisé en ce que** le bord (19) du trou oblong (6) comporte respectivement un abaissement (20) à une transition avec les zones aplaties (16, 17).

13. Boulon instrumenté selon l'une quelconque des revendications 1 à 12, **caractérisé en ce que** le système de détection comporte des capteurs (7) sous la forme de capteurs d'extension.

14. Boulon instrumenté selon la revendication 13, **caractérisé en ce que** le système de détection comporte au moins un capteur de température.

15. Boulon instrumenté selon l'une quelconque des revendications 1 à 14, **caractérisé en ce qu'**un système électronique est intégré dans la tige (2) ou dans un raccord (10) disposé dans ou sur la tige (2).
